# EUROPÄISCHE PATENTANMELDUNG

(11) **EP 0 692 290 A1**
(43) Veröffentlichungstag der Anmeldung: **17.01.1996**
(21) Anmeldenummer: 94110863.1
(22) Anmeldetag: 13.07.1994
(51) Int. Cl.: B01D 17/032, E03F 5/16, C23G 3/00, B01D 17/02

(54) **Fett-/Leichtflüssigkeitsabscheider**

(71) Anmelder: Hammerschmitt, Nikolaus, D-53879 Euskirchen (DE)
(72) Erfinder: Hammerschmitt, Nikolaus, D-53879 Euskirchen (DE)

(57) **Zusammenfassung**

Der Abscheider ist sowohl für organische Fette als auch für mineralische Leichtflüssigkeiten nutzbar.

Der Fettabscheider für organische Fette (Figuren 1-3) besitzt zur flüssig-Erhaltung des abgeschiedenen Fettes eine Wärmeeinrichtung (7,18).

Bei Einsatz als Abscheider für mineralische Leichtflüssigkeiten (Figuren 5-7) sind die entsprechenden behördlichen Bestimmungen einzuhalten.

Das Entfettungsbad mit Integriertem Fett-/Leichtflüssigkeits-Abscheider (Figuren 9-12) wird in der Regel für die Wasser-Rückgewinnung und zur Vermeidung der hohen Entsorgungskosten im geschlossenen Kreislauf eingesetzt.

## Beschreibung

Nach DIN 4040 dürfen Fette organischen Ursprungs nicht in das Kanalnetz bzw. in offene Gewässer eingeleitet werden. Für die Abscheidung derartiger Fette sind Leichtflüssigkeitsabscheider nach DIN 1999 aufgrund der Erhärtung der Fette bei Abkühlung nur nach entsprechenden Änderungen geeignet. Das Problem der Erhärtung entsteht nach jedem längeren Stillstand (z.B. über Nacht). Selbst wenn eine Dauerbeheizung angewendet würde und das Fett im integrierten Speicher vom Entsorger abgepumt werden könnte, was in vielen Fällen nicht möglich ist, besteht die Problematik in den nachfolgenden Arbeitsgängen weiter.

Deshalb wird nachfolgend beschriebenes Verfahren vorgeschlagen, in dem u.a. durch die Ausnutzung des heißen Reinigungswassers das dann flüssige Fett vom Abscheider direkt in einen austauschbaren Entsorgungsbehälter (25) abgeleitet wird. Diese Behälter werden mit dem erhärteten Fett von Entsorgungsfirmen für die Rückgewinnung gegen leere Behälter ausgetauscht

Der Fettabscheider ist stets bis zum Wasserspiegel im Ruhestand (22) mit Wasser gefüllt. Bei zuströmendem Wasser/Fettgemisch vollzieht sich bereits im Schlammfang (1) eine Grobabscheidung. Sinkstoffe sinken zu Boden, das Fett steigt an den Wasserspiegel im Betrieb (23) auf. Über die Trennwand-Überlaufkante, Schlammfang-Abscheider (3) gelangt das Gemisch in den Feinabscheideraum (4). Durch die Erhöhung der Überlaufkante der Ablaufschacht-Überlaufwand (15) entsteht im ganzen Abscheider ein Stau, der die Abscheidung begünstigt.

Während sich das Wasser im Feinabscheideraum (4) langsam absetzt (ca. 0,4 cm/s), steigt das abgeschiedene Fett in den darüberliegenden Fettsammelraum (5) auf und läuft nach Erreichen des Funktions-bedingten Volumens kontinuierlich in den Entsorgungsbehälter (25) ab.

Wenn der Zulauf abgestellt wird, kann nur noch das Wasservolumen ablaufen, welches sich zwischen Wasserspiegel im Ruhestand (22) und Wasserspiegel im Betrieb (23) angestaut hat und zwar über Ablaufdrosselung (16), d.h. im Schlammfang (1) bis zum Erreichen der Trennwand-Überlaufkante, Schlammfang-Abscheider (3).

Dabei vollzieht sich folgendes:

Das aufschwimmende Fett kann nur über den unverdrängbaren Wasserspiegel (21) im Schlammfang (1) zur gegenüberliegenden Oberfläche des Fettsammelraumes (5) überwechseln. Über das doppelwandige Tauchrohr (7) läuft das Fett in den Fettsammelraum (5) ab, weil hier der Wasserspiegel tiefer liegt und das Fett gleichzeitig das Wasser im Tauchrohr (7) verdrängt, so daß das Fett an der Unterkante des Tauchrohres (7) an den tieferliegenden Wasserspiegel aufsteigen kann und dadurch gleichvolumiges Wasser zum Ablauf bringt, bis sich das gesamte Fettvolumen im Fettsammelraum (5) befindet. Bei erneutem Gemisch-Zufluß (inbetriebnahme) drückt der steigende Wasserspiegel das ganze Fett, ausgenommen das Funktions-bedingte Volumen, über den Fettablauf-Rohrstutzen (8) in den Entsorgungsbehälter (25) ab.

Der Feinabscheideraum (4) ist mit einer Drahtgewebe-Abdeckung (13) und einer Strömungsregulierung (12) unten ausgestattet. Dabei sind die Öffnungen (rund, quadratisch oder rechteckig) des freien Durchgangsquerschnittes so bemessen, daß die Absenkgeschwindigkeit im Feinabscheideraum (4) unter 2 cm/s beträgt, d.h. die Geschwindigkeit innerhalb der Strömungsregulierung (12) muß bei einem Durchgang von 1 l/s ca. 20-30 cm/s betragen.

Es hat sich gezeigt, daß durch diese Strömungstechnik Kurzschlußströmungen bzw. tote Räume vermieden werden. Die Aufgabe besteht darin, eine gleichmäßige Absetzgeschwindigkeit des horinzotalen Querschnitts in vertikaler Richtung im Feinabscheideraum (4) zu erzielen.

Diese Aufgabe wird erfüllt durch die extrem unterschiedlichen Schwerkräfte im Wasservolumen und des Wasserspiegels. Hierbei spielt der freie Durchgangsquerschnitt eine ausschlaggebende Rolle. Der Strömungswiderstand muß am Ende des Feinabscheideraumes (4) größer sein als am Anfang. Durch diese abgestimmte Stauwirkung wird ein Fließzustand verhindert und die Abscheidung begünstigt.

Der Fettablauf-Rohrstutzen (8) ist aus Plexiglas gefertigt, wodurch die Einstellung für die erforderliche Fettsäulenhöhe erleichtert wird.

Die Fettsäule hat die Aufgabe, das Eindringen von Wasser in den Entsorgungsbehälter (25) zu verhindern. Das Fettvolumen verteilt sich auf den verdrängten Wasserspiegel derart, daß entsprechend der Dichte bzw. dem spezifischen Gewicht das gleichgewichtige Wasser über den Ablauf (17) verdrängt wird. Die Fettsäulenhöhe über dem Wasserspiegel im Ruhestand (22) befindet sich immer innerhalb des Fettablauf-Rohrstutzens (8). Durch die Höheneinstellung dieses Fettablauf-Rohrstutzens (8) wird die erforderliche Fettsäulenhöhe bestimmt, und zwar nur beim Stand des höchst-möglichen Wasserspiegels im Betrieb (23). Je höher sich die Überlaufkante des Fettablauf-Rohrstutzens (8) über dem höchst-möglichen Wasserspiegel im Betrieb (23) befindet, um so höher stellt sich die Fettsäule über dem verdrängten Wasserspiegel ein, d.h. um so größer ist die Sicherheit, daß kein Wasser in den Entsorgungsbehälter (25) gelangt. Da sich vor der Inbetriebnahme noch kein Fett im Abscheider befindet, genügt es, für die Einstellung des Fettablauf-Rohrstutzens (8) solange Fett in den Fettablauf-Rohrstutzen (8) einzugießen, bis das Fett das Wasser aus dem Fettablauf-Rohrstutzen (8) verdrängt hat.

Auf diese Weise wird bei jeder Inbetriebnahme das Fett vom verdrängten Wasserspiegel in den Entsorgungsbehälter (25) abgedrückt, welches sich während des Betriebes angesammelt hat, so daß der Inhalt des Fettablauf-Rohrstutzens (8) die Sicherheit garantiert, daß kein Wasser in den Entsorgungsbehälter (25) gelangt.

Die Pos. (20) betrifft eine Entlüftung, die wegen starker Geruchsbildung bis über das Dach geführt werden muß, wobei Zu- und Ablauf (2) und (17) mit einbezogen sind.

Ein Ausführungsbeispiel der Erfindung ist in der Zeichnung dargestellt und wird im folgenden näher beschrieben.

Es zeigen:
- FIG - 1: den Längsschnitt des Fettabscheiders
- FIG - 2: den Querschnitt des Fettabscheiders
- FIG - 3: die Draufsicht des Fettabscheiders
- FIG - 4: Detail Strömungsregulierung (12)

Bisher war es nicht möglich, das erhärtete Fett abzusaugen. Bei der in den FIG-1-4 gezeigten Erfindung wird das Fett im warmen Zustand in transportable Entsorgungsbehälter (25) abgeleitet, die vom Entsorger nach Erhärtung des Fettes gegen leere ausgetauscht werden. Dadurch entfällt der Absaugvorgang.

Damit der Fettabscheider auch nach längerem Stillstand (z.B. über Nacht) funktionsfähig ist, ist die Einleitung von Heißwasser in das doppelwandige Tauchrohr (7) vorgesehen, dessen Zuleitung z.B. in Restaurationen etc. vom Heißwasserbehälter ausgeht.

### Fettabscheider

### Positions - Bezeichnung

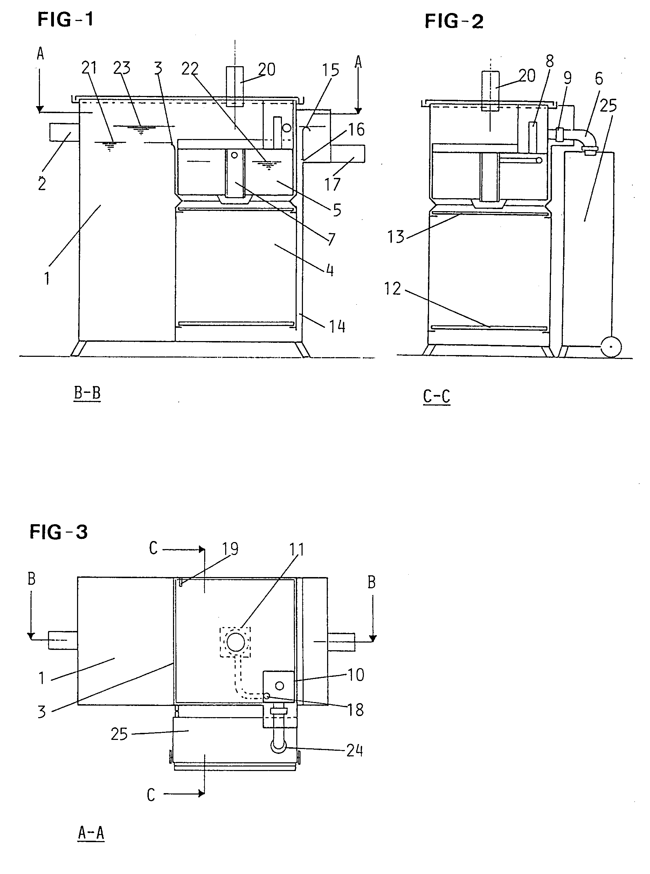

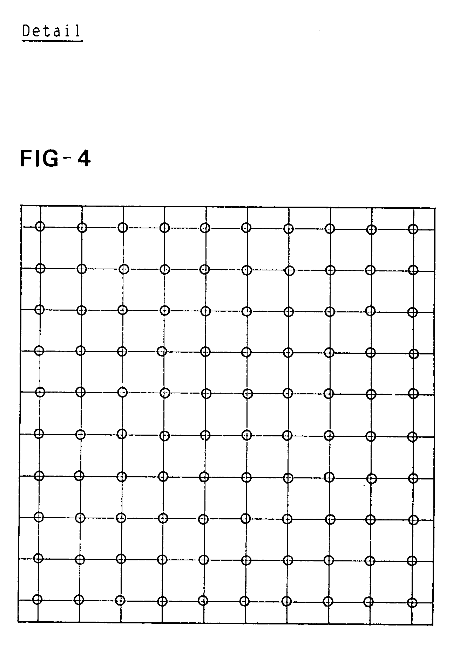

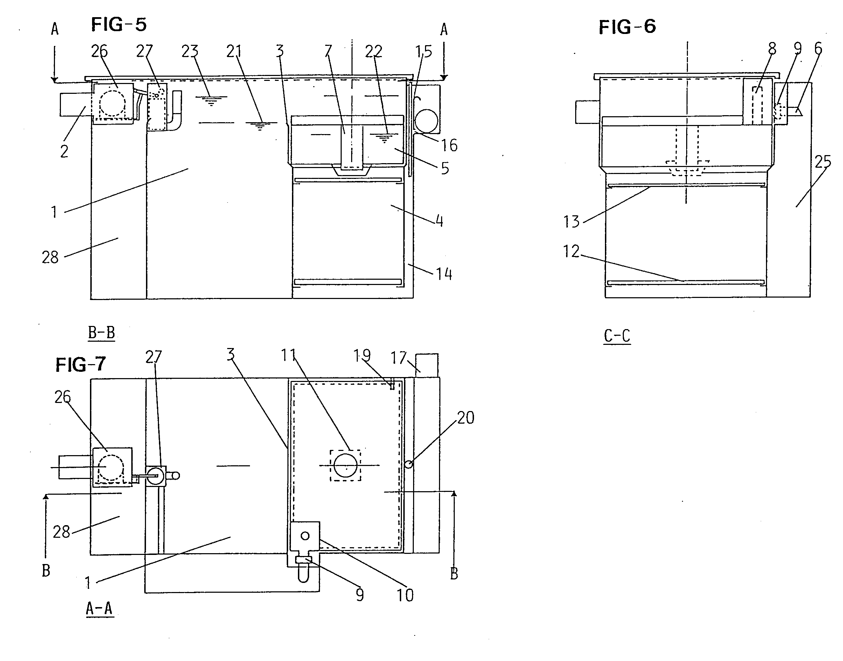

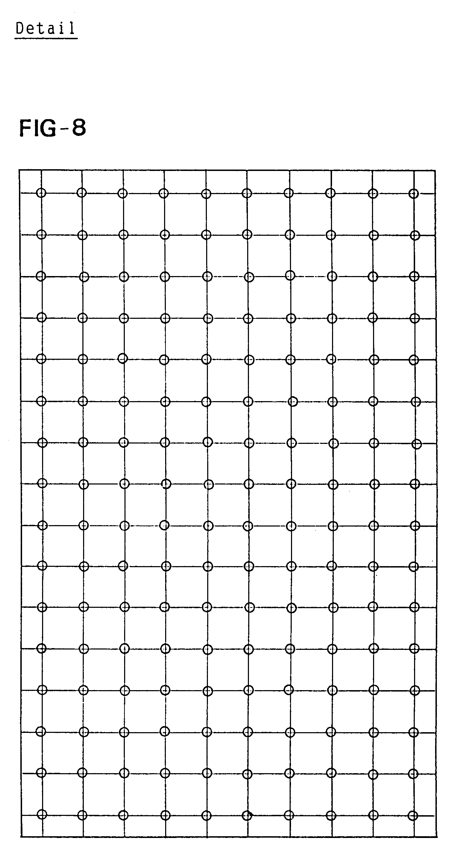

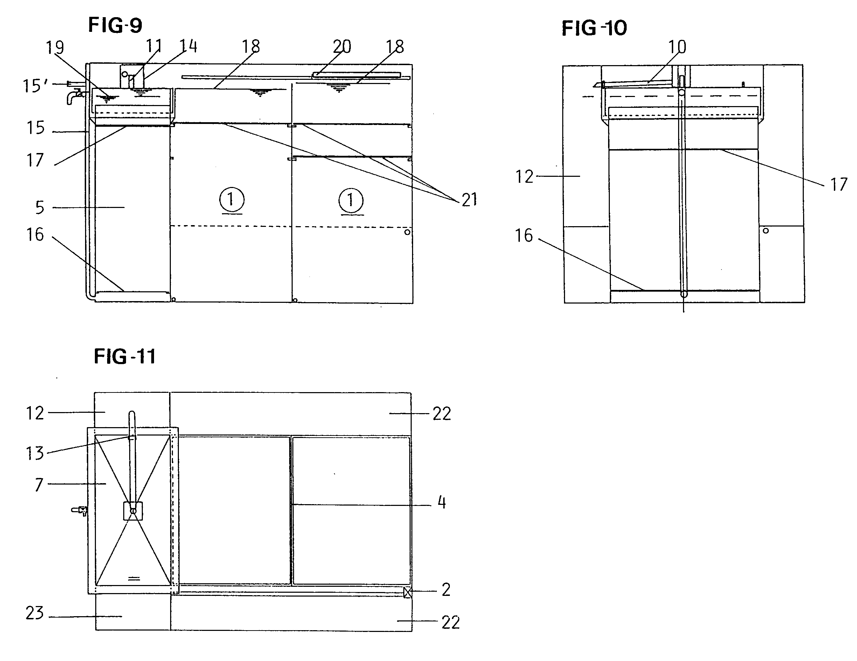

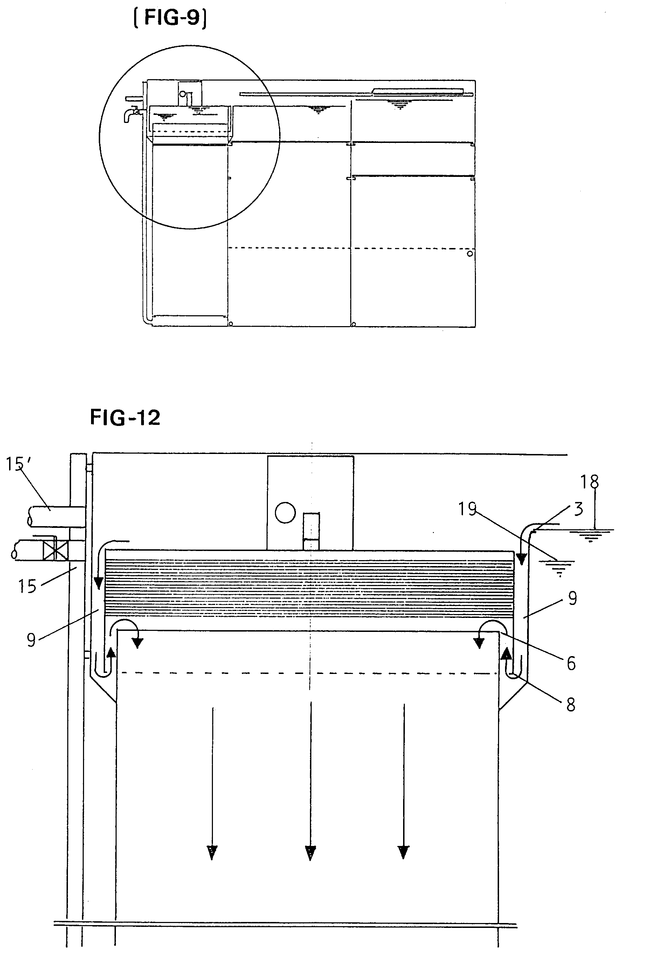

- 1.: Schlammfang
- 2.: Zulauf
- 3.: Trennwand-Überlaufkante, Schlammfang-Abscheider
- 4.: Feinabscheideraum
- 5.: Fettsammelraum mit Wanne
- 6.: Fettablauf
- 7.: Tauchrohr, doppelwandig
- 8.: Fettablauf-Rohrstutzen
- 9.: Verschraubung für Fettsammelraum-Entnahme
- 10.: Fettablauf-Trennwand
- 11.: Leitblech
- 12.: Strömungsregulierung (s.Detail, FIG.4) (alternativ: schiefe Ebene)
- 13.: Drahtgewebe
- 14.: Ablaufschacht
- 15.: Ablaufschacht-Überlaufwand
- 16.: Ablauf-Drosselung
- 17.: Ablauf
- 18.: Warmwasser-Anschluß
- 19.: Auftrieb-Sicherung
- 20.: Entlüftung/Belüftung
- 21.: Schlammfang-Wasserspiegel im Ruhestand
- 22.: Abscheider-Wasserspiegel im Ruhestand
- 23.: Wasserspiegel im Betrieb
- 24.: Verschraubung für Entsorgungsbehälter-Entnahme
- 25.: Entsorgungsbehälter

Die FIG - 5-8 zeigen ein Ausführungsbeispiel für Leichtflüssigkeitsabscheider, wobei die erforderlichen, zusätzlichen Positionen (26), (27) und (28) berücksichtigt sind.

Es zeigen:
- FIG - 1: den Längsschnitt des Leichtflüssigkeitsabscheiders
- FIG - 2: den Querschnitt des Leichtflüssigkeitsabscheiders
- FIG - 3: die Draufsicht des Leichtflüssigkeitsabscheiders
- FIG - 4: Detail-Strömungsregulierung (12)

Entgegen der Pos. (20) des Fettabscheiders, bei dem die Entlüftung wegen starker Geruchsbildung bis über das Dach geführt werden muß, ist beim Leichtflüssigkeitsabscheider am Zu- und Ablauf (2) und (17) ein Geruchsverschluß vorgeschrieben, d.h. die Pos. (20) des Leichtflüssigkeitsabscheiders dient als Belüftung, um ein Leersaugen des Abscheiders im Betrieb zu verhindern.

### Leichtflüssigkeitsabscheider

### Positions - Bezeichnung

- 1.: Schlammfang
- 2.: Zulauf
- 3.: Trennwand-Überlaufkante, Schlammfang-Abscheider
- 4.: Feinabscheideraum
- 5.: Leichtflüssigkeits-Sammelraum mit Wanne
- 6.: Leichtflüssigkeitsablauf
- 7.: Tauchrohr
- 8.: Leichtflüssigkeitsablauf-Rohrstutzen
- 9.: Verschraubung für Leichtflüssigkeits-Sammelraum Entnahme
- 10.: Leichtflüssigkeitsablauf-Trennwand
- 11.: Leitblech
- 12.: Strömungsregulierung (s.Detail, FIG.8) (alternativ: schiefe Ebene)
- 13.: Drahtgewebe
- 14.: Ablaufschacht
- 15.: Ablaufschacht-Überlaufwand
- 16.: Ablauf-Drosselung
- 17.: Ablauf
- 18.: nur bei Fettabscheider
- 19.: Auftrieb-Sicherung
- 20.: Belüftung
- 21.: Schlammfang-Wasserspiegel im Ruhestand
- 22.: Abscheider-Wasserspiegel im Ruhestand
- 23.: Wasserspiegel im Betrieb
- 24.: nur bei Fettabscheider
- 25.: Leichtflüssigkeits-Speicher
- 26.: Zulaufverschluß
- 27.: Überfüllsicherung
- 28.: Mehrzweckraum

Die FIG - 9-12 zeigen ein Ausführungsbeispiel für ein "Entfettungsbad mit integriertem Fett-/Leichtflüssigkeitsabscheider" (s.Positions-Bezeichnung für Entfettungsbad mit integriertem Fett-/Leichtflüssigkeitsabscheider, Seite 12)

In der Regel werden für die Reinigung von Teilen in der galvanischen Industrie und Reparatur-Werkstätten, etc., Entfettungsbäder verwendet, deren Reinigungslauge im geschlossenen Kreislauf genutzt wird. Durch den Einsatz von Umlauf-Pumpen und Düsen entstehen hierbei stabile Emulsionen, die bei Wartungsarbeiten als Sondermüll mit immensen Kosten entsorgt werden müssen.

Die beschriebene Einrichtung: Entfettungsbad mit integriertem Fett-/Leichtflüssigkeitsabscheider ist zum Beispiel geeignet für die Oberflächenentfettung in der galvanischen Industrie, ferner für alle Instandsetzungsbetriebe, für Maschinen- und Apparatebau, etc.

Der untere Bereich des Entfettungsbades (1) dient als Schlammfang, der bei Wartungsarbeiten mit entsorgt wird. Durch die Trennwände (3) und (4) entstehen gegenseitig dicht verschweißte Kammern und somit unabhängig voneinander unverdrängbare Räume, so daß durch die stufenweise Anordnung der Überlaufkanten der Trennwände (3) und (4) die abgeschiedenen Fett-/Leichtflüssigkeiten in Richtung Abscheider durch Zuführung geringer Mengen Frischwasser beschleunigt abfließen. Hierdurch bleibt die Oberfläche stets Fett-/Leichtfl.-frei und das Entnehmen der Teile durch eine Fett-/Leichtfl.-Schicht und evtl. Nachreinigung entfallen. Die zu reinigenden Teile sollen bei diesem Konzept in die Reinigungslauge eingetaucht werden, und erst nach Einwirkung der Lauge abgespült werden, wodurch eine Emulsion-erzeugende Pump-Einrichtung entfallen kann. Entsprechend dem Frischwasserzufluß muß die Reinigungslauge konstant gehalten werden.

Der Wasserspiegel im Feinabscheideraum (5) ist ebenfalls abgestuft angeordnet, so daß das zufließende Fett-/Leichtflüssigkeits-Wasser-Gemisch über den umlaufenden Zulaufschacht (9) abläuft und über die untere Überlaufkante (8) an der Innenseite des Fett-/Leichtflüssigkeits-Sammelraums (7) aufsteigt, wobei Fett- und Leichtflüssigkeit an den Wasserspiegel (19) aufsteigen.

Entsprechend dem Frischwasser-Zufluß senkt sich das Wasservolumen im Feinabscheideraum (5) gleichmäßig ab. Nach Durchgang durch die Strömungsregulierung (16) fließt dieses Wasser über das Ablaufrohr mit Hahn (15) ab. Auch bei längerem Ruhestand bleibt der Hahn (15) offen.

Bei erneuter Inbetriebnahme wird der Hahn (15) geschlossen, so daß die Fett-/Leichtflüssigkeit im Fett-/Leichtfl.-Sammelraum (7) durch zufließendes Wasser über den Fett-/Leichtfl.-Ablauf-Rohrstutzen (11) in den separaten Fett-/Leichtfl.-Speicher (12) abgedrückt wird. Hierbei ist ein überhöhter 2. Ablauf (15') als Sicherheits-Ablauf angeordnet, der immer offen ist und dadurch den höchst-möglichen Wasserspiegel im Abscheider-Teil bestimmt. Der Wasserspiegel im Entfettungsbad (1) wird durch den Abdrückvorgang und das Schließen des Ablaufrohr-Hahns (15) nicht berührt. Der Abdrückvorgang muß je nach Anfall von Fett-/Leichtfl. wiederholt werden. Nach beendigung des Abdrück-Vorgangs wird der Hahn (15) wieder geöffnet. Wie bereits erwähnt, bleibt der Hahn (15) im Betrieb und im Ruhestand geöffnet.

Das zufließende Frischwasser erhält den Wasserspiegel konstant, die gleiche Ablaufmenge über das Ablaufrohr mit Hahn (15) wird zur Wiederverwendung in einen Sammelbehälter abgeführt.

### Entfettungsbad mit integriertem Fett-/Leichtfl.-Abscheider

### Positions-Bezeichnung

- 1.: Entfettungsbad (Schlammfang)
- 2.: Frischwasser-Zulauf
- 3.: Überlaufkante, Trennwand Entfettungsbad-Abscheider
- 4.: Zwischen-Trennwand
- 5.: Feinabscheideraum
- 6.: Obere Überlaufkante-Feinabscheideraum
- 7.: Fett-/Leichtfl.-Sammelraum (abnehmbar)
- 8.: Untere Überlaufkante, Fett-/Leichtfl.-Sammelraum
- 9.: Umlaufender Zulaufschacht (zwischen Pos.7 u.Außenw.)
- 10.: Fett-/Leichtflüssigkeits-Ablauf
- 11.: Fett-/Leichtfl.-Ablauf-Rohrstutzen
- 12.: Fett/Leichtflüssigkeits-Speicher
- 13.: Verschraubung, Pos.7 und Pos.12
- 14.: Fett-/Leichtfl.-Ablauf-Trennwand
- 15.: Ablaufrohr mit Hahn
- 15': Sicherheits-Ablaufrohr
- 16.: Strömungsregulierung
- 17.: Drahtgewebe
- 18.: Wasserspiegel im Entfettungsbad
- 19.: Wasserspiegel im Fett-/Leichtfl.-Sammelraum
- 20.: Teile-Spülablage (je nach Bedarf verschiebbar)
- 21.: Teile-Auflageböden (je nach Bedarf Höhen-verstellbar)
- 22.: Arbeits-Podest
- 23.: Frischwasser-Behälter

## Patentansprüche

1. Fettabscheider für organische Fette, bedingt auch für Leichtflüssigkeiten mineralischen Ursprungs, mit Schlammfang (1) für Sinkstoffe, Feinabscheideraum (4), Fettsammelraum mit Wanne (5), mit kontinuierlichem Fettablauf (6), mit einem vom Abscheider getrennten Entsorgungsbehälter (25), dadurch gekennzeichnet, daß über dem Feinabscheideraum (4) ein unten offener, herausnehmbarer Fettsammelraum mit Wanne (5) unter dem Wasserspiegel angeordnet ist, der mindestens ein nach unten führendes, doppelwandiges Tauchrohr (7) und einnen nach oben geführten Fettablauf-Rohrstutzen (8) ausweist, daß zur flüssig-Erhaltung des Fettes eine Beheizung des doppelwandigen Tauchrohres (7) (und/oder doppelwandigen Deckels) installiert ist, daß der Fettsammelraum mit Wanne (5) für das Einfüllen von Füllkörpern und Durchführung von Wartungsarbeiten abnehmbar angeordnet ist, daß der Feinabscheideraum (4) mit strömungstechnischen Einrichtungen (13) und (12) versehen ist.

2. Fettabscheider nach Anspruch 1, dadurch gekennzeichnet, daß die Trennwand-Überlaufkante, Schlammfang-Abscheider (3) höher angelegt ist als der Abscheider-Wasserspiegel im Ruhestand (22) und somit die Flüssigkeit mit dem aufschwimmenden Fett bei abgestelltem Zufluß von der Oberfläche des Abscheiders überwechselt und bei weiterem Absinken über die untere Überlaufkante des doppelwandigen Tauchrohres (7) in den Fettsammelraum mit Wanne (5) abfließt.

3. Fettabscheider nach Anspruch 2, dadurch gekennzeichnet, daß durch steigenden Wasserspiegel bei erneuter Inbetriebnahme der gesamte Inhalt des Fettsammelraumes mit Wanne (5) über den Fettablauf-Rohrstutzen (8) und den Fettablauf (6) in den Entsorgungsbehälter (25) abläuft.

4. Fettabscheider nach Anspruch 3, dadurch gekennzeichnet, daß das während des Betriebes im Feinabscheideraum (4) abgeschiedene Fett in den unten offenen Fettsammelraum mit Wanne (5) aufsteigt und kontinuierlich in den Entsorgungsbehälter (25) abläuft, wenn das funktionserforderliche Fettvolumen überschritten wird, wobei sich die über dem Wasserspiegel im Betrieb (23) einstellende Fettsäule das Eindringen von Wasser in den Entsorgungsbehälter (25) verhindert.

5. Fettabscheider nach Anspruch 4, dadurch gekennzeichnet, daß der Fettsammelraum mit Wanne (5) mit doppelwandigem Tauchrohr (7) und nach oben nur mit einem Fettablauf-Rohrstutzen (8) aus durchsichtigem Material (z.B. Plexiglas) ausgestattet ist, daß der Fettsammelraum mit Wanne (5) abnehmbar angeordnet ist, um das Fett bei Wartungsarbeiten über einen Entsorgungsbehälter (25) z.B. mit Warmluft zu lösen.

6. Fettabscheider nach Anspruch 1, dadurch gekennzeichnet, daß der Feinabscheideraum (4) mit einem Drahtgewebedeckel (13) und einer Strömungsregulierung (12) ausgestattet ist (s.Detail, FIG-4)

7. Fettabscheider nach Anspruch 1-6, dadurch gekennzeichnet, daß die beschriebene Einrichtung ohne Heizung (18) auch für Leichtflüssigkeiten aller Art betrieben wird, wobei jedoch die behördlichen Bestimmungen für Leichtflüssigkeits-Abscheider zu beachten sind. z.B. die Pos (26) (27) und (28) berücksichtigt werden (s. Seite 8 , Positionsbezeichnung für Leichtflüssigkeits-Abscheider)

8. Fett-/Leichtflüssigkeitsabscheider nach Anspruch 1-7, dadurch gekennzeichnet, daß der Feinabscheideraum (5) ( s. Seite 12, Positions-Bezeichnung für Entfettungsbad mit integriertem Fett-/Leichtflüssigkeitsabscheider) so in ein Entfettungsbad (1) integriert ist, daß der untere Bereich des Entfettungsbades (1) als Schlammfang dient und der obere Bereich als Entfettungsraum ausgebildet ist, in dem sich gleichzeitig die Grobabscheidung vollzieht.

9. Fett-/Leichtflüssigkeitsabscheider nach Anspruch 8, dadurch gekennzeichnet, daß im Entfettungs- und Schlammfang-Bereich (1) eine, oder mehrere Trennwände, hier (3) und (4) angeordnet sind, deren Überlaufkanten, in Fließrichtung folgend, jeweils tiefer liegen, um den Abfluß der abgeschiedenen Fett-/Leichtflüssigkeit zu beschleunigen.

10. Fett-/Leichtflüssigkeitsabscheider nach Anspruch 8, dadurch gekennzeichnet, daß die Höhen-Anordnung des Wasserspiegels im Fett-/Leichtflüssigkeits-Sammelraum (19) von der Dichte der anfallenden Fett-/Leichtflüssigkeit bestimmt wird.

11. Fett-/Leichtflüssigkeitsabscheider nach Anspruch 1, dadurch gekennzeichent, daß das zufließende Gemisch (Fett-/Leichtflüssigkeit/Wasser) über die Außenwände des Fett-/Leichtflüssikeits-Sammelraumes (7),(jedoch ohne Wanne) in den umlaufenden Zulaufschacht (9) absinkt, die untere Überlaufkante (8) unterfließt und an der Innenseite des Fett-/Leichtflüssigkeits-Sammelraumes (7) aufsteigt, wobei sich das Wasser an der oberen Überlaufkante (6) von Fett-/Leichtflüssigkeit trennt und gleichmäßig langsam durch den Feinabscheideraum (5), über die Strömungsregulierung (16) und Ablaufrohr mit Hahn (15) abläuft.

12. Fett-/Leichtflüssigkeitsabscheider nach Anspruch 1-11, dadurch gekennzeichnet, daß am Anfang des Feinabscheideraumes (5) und am Boden je eine Einrichtung angeordnet ist (17) und (16), die ein gleichmäßiges Absinken des Wasserdurchgangs sichern (unter 1cm/s).
